# EUROPÄISCHE PATENTANMELDUNG

(11) **EP 0 648 423 A1**
(43) Veröffentlichungstag der Anmeldung: **19.04.1995**
(21) Anmeldenummer: 93116659.9
(22) Anmeldetag: 14.10.1993
(51) Int. Cl.: A22C 13/02

(54) **Tragorgan aus Kunststoff für geraffte Naturdarm-Wursthüllen**

(71) Anmelder: FIRMA EWA LANG, D-67592 Flörsheim-Dalsheim (DE)
(72) Erfinder: FIRMA EWA LANG, D-67592 Flörsheim-Dalsheim (DE)

(57) **Zusammenfassung**

Es wird angestrebt, ein Tragorgan für geraffte Naturdarm-Wursthüllen derart zu gestalten, daß es als Trommelware aufgerollt angeliefert und vor dem Aufbringen von gerafften Naturdärmen auf die benötigte Länge zurechtgeschnitten werden kann.
Erreicht wird dies dadurch, daß das Tragorgan aus einer in der Mitte längsgefalteten, biegsamen Leiste besteht, die mit ihren beiden Teilen in Form von planen Schenkeln auf dem Wurstmasse-Füllrohr rittlings und dachartig aufsitzt.

## Beschreibung

Die Erfindung betrifft ein Tragorgan aus Kunststoff für geraffte Naturdarm-Wursthüllen.

Der Betrieb von Wurstfüllmaschinen in Wurstfabriken erfordert das Anliefern und Aufschieben von gerafften Naturdärmen auf das Füllrohr der Wurstfüllmaschine ständig und in großen Mengen.

Die Naturdarm-Wursthüllen werden als auf rohr- oder schlauchförmigen Tragorganen gerafft aufgezogene Darmzüge angeliefert, die auf das Füllrohr der Wurstfüllmaschinen aufzuschieben sind.

Das hohle Tragorgan mit der gerafften Naturdarm-Wursthülle wird dabei auf das Füllrohr der Wurstfüllmaschine geschoben und der geraffte Darm wird durch Herausziehen des Tragorgans auf das Füllrohr abgestreift. Danach kann, nach Verschließen des vorderen offenen Darmendes durch einen Knoten, der Befüllvorgang einsetzen.

Durch die GB-PS 938 918 ist ein schlauchbeutelförmiges Tragorgan bekanntgeworden, das jedoch den Nachteil hat, daß für unterschiedliche Füllrohrdurchmesser unterschiedliche Schlauchbeutel bereitzuhalten und zu verwenden sind, die außerdem auch noch nach dem Aufschieben auf das Füllrohr am Beutelboden abgeschnitten werden müssen.

Ein anderes durch die DE-OS 27 59 005 bekanntgewordenes rohrförmiges Tragorgan hat die Nachteile, daß seine Wand erst in Längsrichtung aufzuschneiden ist und daß die einzelnen Rohrstücke sich nicht zur Transporterleichterung zu einer Trommel aufwickeln lassen.

Der Erfindung liegt die Aufgabe zugrunde, ein derartiges Tragorgan für geraffte Wursthüllen baulich derart umzugestalten und zu vereinfachen, daß sowohl der Gestehungspreis wesentlich erniedrigt als auch Transport und Handhabung wesentlich erleichtert werden.

Gelöst wird diese Aufgabe nach der Erfindung dadurch, daß das Tragorgan aus einer in der Mitte längsgefalteten, biegsamen Leiste besteht, die mit ihren beiden Teilen in Form von planen Schenkeln auf dem Wurstmasse-Füllrohr rittlings und dachartig aufsitzt.

Eine in der Mitte längsgefaltete Kunststoffleiste kann als Trommelware aufgerollt dem Darmhändler geliefert werden, der sich die einzelnen Tragleisten auf die gewünschten Längen zuschneidet. da diese längsgefalteten Tragleisten nach dem Aufschieben auf das Füllrohr der Wurstfüllmaschine rittlings auf dem Füllrohr aufsitzen, spielt der Durchmesser des Füllrohrs keine Rolle.

Die längsgefaltete Kunststoffleiste wird nach ihrem Aufsetzen auf das Füllrohr am hinteren Ende erfaßt und schräg nach oben herausgezogen, so daß die gerafften Naturdarm-Wursthüllen auf dem Füllrohr verbleiben.

Es ist klar, daß lediglich in der Mitte längsgefaltete Kunststoffleisten im Gestehungspreis wesentlich niedriger sind als Schläuche oder Rohre, die zudem auch noch in der Handhabung umständlicher und auch an bestimmte Abmessungen gebunden sind.

## Patentansprüche

1. Tragorgan aus Kunststoff für geraffte Naturdarm-Wursthüllen dadurch gekennzeichnet, daß
- das Tragorgan aus einer in der Mitte längsgefalteten, biegsamen Leiste besteht,
- die mit ihren beiden Teilen in Form von planen Schenkeln auf dem Wurstmasse-Füllrohr rittlings und dachartig aufsitzt.
